# EUROPEAN PATENT APPLICATION

(11) **EP 2 555 137 A1**
(43) Date of publication of application: **06.02.2013**
(21) Application number: 11382328.0
(22) Date of filing: 25.10.2011
(51) Int. Cl.: G06K 9/00

(54) **Finger acquisition substrate**

(30) Priority: 05.08.2011 TW 100128073
(71) Applicant: Gingy Technology, Inc., Hsinchu City (TW)
(72) Inventor: Chien-Hsing, Wu, Kaohsiung City (TW); Jung-Tsung, Chou, Hsinchu County (TW)
(74) Representative: Urizar Anasagasti, Jesus Maria

(57) **Abstract**

A finger board for a finger to press including a board layer and a micro-structure layer is disclosed. The board layer has a first refractive index, and has a first board surface and a second board surface opposite to each other. The first board surface is used for the finger to press. The micro-structure layer has a second refractive index different from the first refractive index, and is disposed on the second board surface. Therefore, a light ray emitted from the micro-structure layer to the first board surface can be reflected and scattered on the first board surface, so as to uniformly distribute energy.

## Description

### BACKGROUND

### Technical Field

The present disclosure relates to a finger board, and more particularly to a finger board applicable to a fingerprint recognition apparatus.

### Related Art

A conventional fingerprint input apparatus comprises an imaging device, a light guiding plate disposed above the imaging device, and two light emitting devices disposed on two sides of the light guiding plate. When the light emitting device emits light, the light guiding plate guides incident light to project onto a finger and then a total internal reflection occur while the light is reflected from the finger to the imaging device. Accordingly, the fingerprint is recognized.

However, since the total internal reflection must occurs in the light guiding plate, during assembly, the angle between the light emitting device and the light guiding plate must be well-adjusted, so that the incident light beams from the light emitting device can be effectively guided to different parts of the finger. Therefore, the assembly is difficult, and the cost of the assembly is high, which is not economical.

Moreover, the light guiding plate has micro-structures. A light rays are refracted or scattered by the micro-structures to be uniformly distributed on the light guiding plate. However, since the light guiding plate is manufactured by injection molding, formation of the micro-structures on the light guiding plate is not easily. Besides, the arrangement of the micro-structures varies when different fingerprint recognition systems are adopted. Accordingly, different mould needs to be made to fabricate a light guiding plate having a different micro-structures arrangement, and thereby, the production cost is increased.

### SUMMARY

Accordingly, the present disclosure provides a finger board, which solves the problem that the assembly of a light emitting device must be so accurate that total internal reflection occurs in the light guide plate..

A finger board according to an embodiment applied for being pressed by a finger comprises a board layer and a micro-structure layer. The board layer with first refractive index comprises a first board surface and a second board surface opposite to each other. The first board surface is used for the finger to press. The micro-structure layer with second refractive index different from the first refractive index is disposed on the second board surface. After projected in the micro-structure layer, a light ray is refracted between the micro-structure layer and the board layer, reflected and scattered on the first board surface, refracted again between the micro-structure layer and the board layer, and then emitted out of the micro-structure layer.

A finger board according to an embodiment is applied for a finger to press. The finger board comprises a board layer, a micro-structure layer, a medium layer, and an adhesion layer. The board layer with first refractive index comprises a first board surface and a second board surface opposite to each other. The first board surface is used for the finger to press. The micro-structure layer with second refractive index different from the first refractive index is disposed at one side of the board layer having the second board surface. The medium layer with third refractive index different from the first refractive index and the second refractive index is disposed between the micro-structure layer and the board layer. The adhesion layer with fourth refractive index different from the first refractive index, the second refractive index, and the third refractive index is disposed between the medium layer and the board layer. After projected in the micro-structure layer, a light ray is refracted between the micro-structure layer and the medium layer, between the medium layer and the adhesion layer, and between the adhesion layer and the board layer in turn, then reflected and scattered on the first board surface, then refracted between the board layer and the adhesion layer, between the adhesion layer and the medium layer, and between the medium layer and the micro-structure layer in turn, and then emitted out of the micro-structure layer.

In the finger board according to the present disclosure, a plurality of micro-structures is employed to make the light ray be uniformly distributed on the finger board. Therefore, the finger is illuminated by the uniform and dense light ray emitted form the finger board, and thereby, the fingerprint recognition rate is improved.

Moreover, the finger board comprises multiple layers with different refractive indexes so a part of the light ray entering the finger board is reflected and another part of the light ray entering the finger board is scattered. Therefore, a fingerprint recognition apparatus employing the finger board of the present disclosure does not need to restrict the installation position and angle of other devices, thereby simplifying an assembly procedure of the fingerprint recognition apparatus, reducing the assembly cost, and making the fingerprint recognition apparatus even thinner. In addition, the micro-structure layer of the finger board according to the present disclosure may be formed by rolling screen printing, thereby saving the cost of molds.

### BRIEF DESCRIPTION OF THE DRAWINGS

The present disclosure will become more fully understood from the detailed description given herein below for illustration only, and thus are not limitative of the present disclosure, and wherein:
FIG. 1 is a schematic structural view of a fingerprint recognition apparatus according to an embodiment;
FIG. 2 is a structural sectional view of a finger board according to an embodiment;
FIG. 3 is a diagram of a transmission path of a light ray entering a micro-structure layer according to an embodiment;
FIG. 4 is a diagram of a transmission path of a light ray in a finger board according to an embodiment;
FIG. 5A is a diagram of a transmission path of a light ray on a first board surface according to an embodiment;
FIG. 5B is a diagram of a transmission path of a light ray on a first board surface according to an embodiment;
FIG. 6 is a structural sectional view of a finger board according to another embodiment; and
FIG. 7 is a diagram of a transmission path of a light ray in a finger board according to another embodiment.

### DETAILED DESCRIPTION

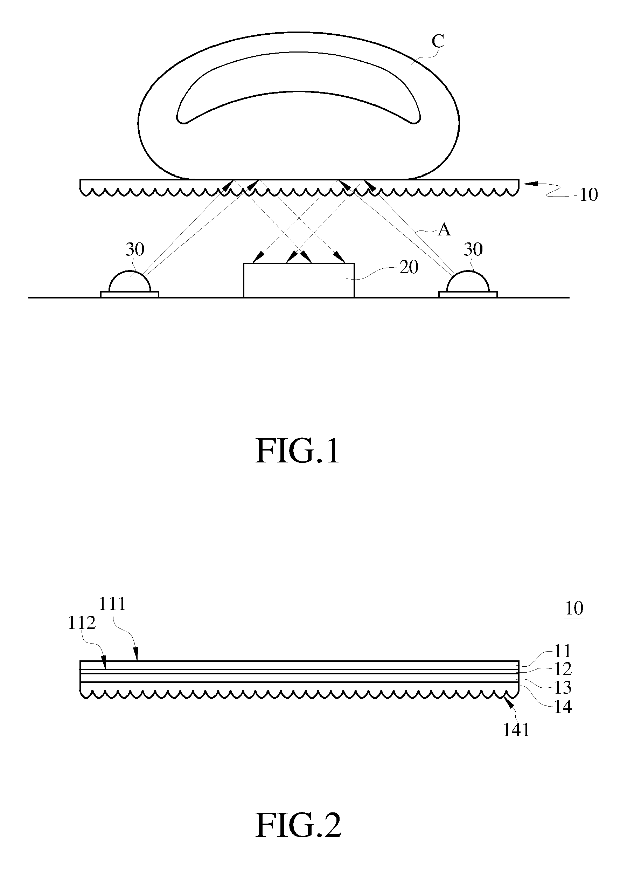

FIG. 1 is a schematic structural view of a fingerprint recognition apparatus according to an embodiment. FIG. 2 is a structural sectional view of a finger board according to an embodiment.

Referring to FIG. 1 and FIG. 2, the finger board 10 of this embodiment is applied to the fingerprint recognition apparatus. The fingerprint recognition apparatus comprises the finger board 10, an imaging device 20, and at least one light emitting device 30. When a finger C is placed on the finger board 10, the light emitting device 30 may be driven to emit a light ray A towards the finger board 10. The light ray A enters the finger board 10 and irradiates the finger C, and a fingerprint pattern with light and shade portions is generated. Thus the imaging device 20 is capable of capturing and recognizing fingerprints. In the drawing, the path of the light ray A is only taken as an example, and not intended to limit the present disclosure.

The finger board 10 comprises a board layer 11, a micro-structure layer 14, a medium layer 13, and an adhesion layer 12. The material of the board layer 11 may be glass or acrylic, but the present disclosure is not limited thereto. In this embodiment, the board layer 11 is made of acrylic which has a first refractive index (about 1.49). The material of the micro-structure layer 14 may be an ultraviolet curing agent, which has a second refractive index (about 1.53). The medium layer 13 may be made of polyethylene terephthalate (PET) which has a third refractive index (about 1.57). The adhesion layer 12 may be made of an optically clear adhesive (OCA) which has a fourth refractive index (about 1.48). In other words, the board layer 11, the micro-structure layer 14, the medium layer 13, and the adhesion layer 12 have different refractive indexes.

Moreover, the board layer 11 has a first board surface 111 and a second board surface 112 opposite to each other. The first board surface 111 is used for the finger C to press. The micro-structure layer 14 is disposed at one side of the board layer 11 having the second board surface 112, and one side of the micro-structure layer 14 opposite to the board layer 11 has a plurality of micro-structures 141. The medium layer 13 is disposed between the micro-structure layer 14 and the board layer 11, and the adhesion layer 12 is disposed between the medium layer 13 and the board layer 11.

With respect to manufacturing, an ultraviolet curing agent layer is first coated on a side of the medium layer 13. Then, the plurality of micro-structures 141 is formed on the ultraviolet curing agent layer through molding or roller imprinting or flat-plate imprinting. Ultraviolet light irradiates the ultraviolet curing agent layer to form the micro-structure layer 14. An OCA is coated on the second board surface 112, and the medium layer 13 is adhered to the second board surface 112 so the medium layer 13 is located between the micro-structure layer 14 and the board layer 11. After the OCA is cured to form the adhesion layer 12, the medium layer 13 is firmly combined on the second board surface 112 of the board layer 11. In other words, the medium layer 13 is adhered to the board layer 11 through the adhesion layer 12.

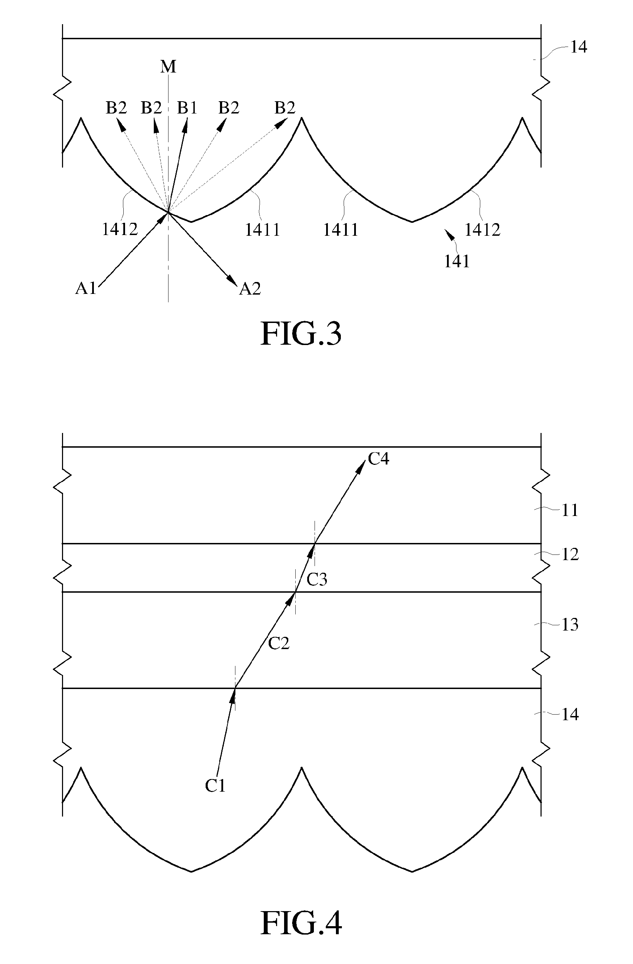

FIG. 3 is a diagram of a transmission path of a light ray entering a micro-structure layer according to an embodiment. Referring to FIG. 3, the plurality of micro-structures 141 are cones protruding from one side of the micro-structure layer 14 opposite to the medium layer 13. In particular, the shape of the cross section of the micro-structure 141 is a conical structure formed by a first conical surface 1411 and a second conical surface 1412.

Through the conical structure, when the finger C is placed on the first board surface 111 of the board layer 11, the light emitting device 30 may be driven to emit a light ray towards the finger board 10 so the light ray enters the finger board 10 from the plurality of micro-structures 141 of the micro-structure layer 14. The micro-structures 141 are distributed on the micro-structure layer 14 so the side of the finger board 10 facing the light emitting device 30 has a plurality of conical structures. In this manner, through the design of the plurality of micro-structures 141, the transmission path of the incident light ray emitted from the light emitting device 30 may be changed, and the incident light ray is scattered. That is to say, after the incident light rays enter the micro-structures 141, the incident light rays are uniformly distributed in the finger board 10.

In particular, as shown in FIG. 3, for example, when an incident light ray A1 is emitted from the air into the micro-structure 141, a transmitted light ray B1 and a plurality of scattered light rays B2 near to a normal line M are generated and enter the micro-structure layer 14 of the finger board 10 respectively. Moreover, a part of the incident light rays A1 also form a reflected light ray A2 at a surface of the micro-structure 141.

Therefore, when a plurality of incident light rays A1 enters the plurality of micro-structures 141, through the design of the micro-structures 141, the incident light rays A1 are converted into more and denser transmitted light rays B1 and scattered light rays B2 so the whole surface of the finger board 10 is illuminated uniformly, and therefore, the brightness of the area of the first board surface 111 corresponding to the finger C is sufficient.

Since changes of the depth, an angle of refraction surfaces, and disposition density of the plurality of micro-structures 141 of the micro-structure layer 14 may influence a light refraction effect, the micro-structures 141 may be appropriately disposed according to actual requirements to obtain optimum brightness and brilliance.

FIG. 4 is a diagram of a transmission path of a light ray in a finger board according to an embodiment.

As shown in FIG. 4, when a light ray C1 is emitted from the micro-structure layer 14 to the medium layer 13, since the refractive index of the micro-structure layer 14 is different from that of the medium layer 13, the light ray C1 is refracted between the micro-structure layer 14 and the medium layer 13, and enters the medium layer 13 along a path of a light ray C2. When the light ray C2 is emitted from the medium layer 13 to the adhesion layer 12, since the refractive index of the medium layer 13 is different from that of the adhesion layer 12, the light ray C2 is refracted between the medium layer 13 and the adhesion layer 12, and enters the adhesion layer 12 along a path of a light ray C3. When the light ray C3 is emitted from the adhesion layer 12 to the board layer 11, since the refractive index of the adhesion layer 12 is different from that of the board layer 11, the light ray C3 is refracted between the adhesion layer 12 and the board layer 11, and enters the board layer 11 along a path of a light ray C4. In other words, when the light ray is irradiated from the micro-structure layer 14 to the board layer 11 in the finger board 10, the light ray is refracted three times.

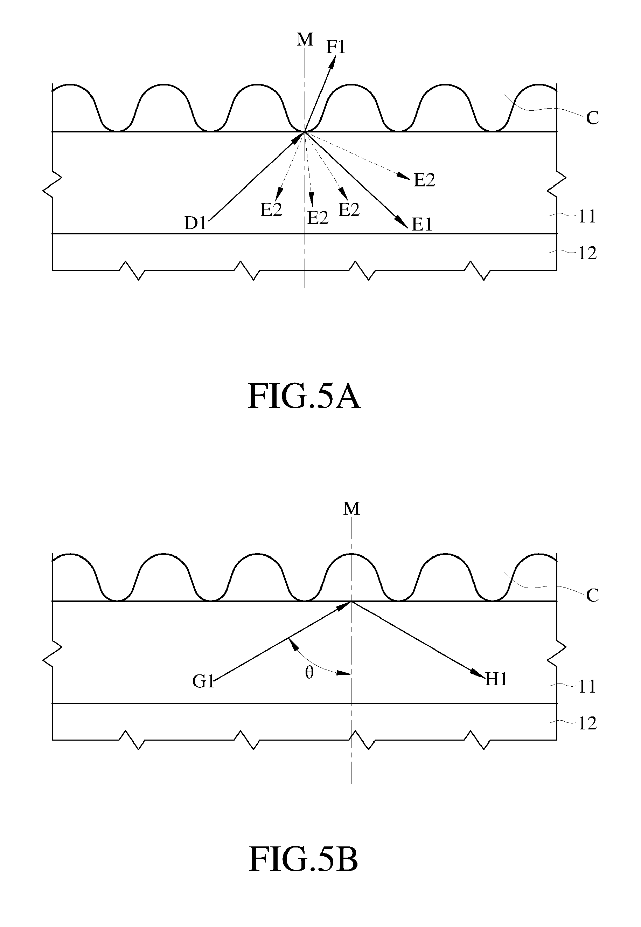

FIG. 5A is a diagram of a transmission path of a light ray on a first board surface according to an embodiment. FIG. 5B is a diagram of a transmission path of a light ray on a first board surface according to an embodiment.

As shown in FIG. 5A, when light rays D1 are emitted from the board layer 11 to a ridge of a fingerprint, a part of the light rays D1 are transmitted through the ridge of the fingerprint to generate a transmitted light ray F1 near to the normal line M. Besides, the surface of the ridge of the fingerprint is uneven so another part of the light rays D1 generate a reflected light ray E1 and a plurality of scattered light rays E2 on the region of the board layer 11 in contact with the ridge. The light rays D1 are irradiated onto the finger from the board layer 11, and thus the total-internal-reflection light ray is not generated. In this manner, a dark area having weak brightness is formed on the board layer 11 through which the light rays D1 transmits into the ridge of the fingerprint.

As shown in FIG. 5B, when the light rays G1 are emitted to a trough of the fingerprint, since the trough of the fingerprint forms a depression on the board layer 11, the light rays G1 enter the air from the board layer 11. Moreover, a surface of the finger board 10 is even so when the incident angle of the light ray G1 is greater than a threshold angle θ, a total-internal-inflection light ray H1 is generated. In this manner, a bright area having strong brightness is formed on the board layer 11 the total internal reflection occurs. Accordingly, a fingerprint pattern with sharp contrast is formed so that the fingerprint image captured by the imaging device 20 is clear.

Accordingly, the finger board 10 of this embodiment does not employ the total internal reflection principle to enable the imaging device 20 to capture the fingerprint image generated due to the irradiation of the light emitting device 30 so there is more flexibility in the disposition of the light emitting device 30 and the imaging device 20. Comparing with the conventional fingerprint recognition apparatus employing the finger board adopting the total reflection principle, specific relative position, angles, and distances among the light emitting device, the imaging device, and the finger board are required due to the restriction of an angle of the total reflection. Therefore, it is not beneficial for the conventional fingerprint recognition apparatus to become thinner. With respect to actual sizes, the thickness of the conventional fingerprint recognition apparatus is about 11 mm while the thickness of the fingerprint recognition apparatus adopting the finger board 10 of this embodiment may be reduced to 5 mm, which verifies the advantage of the finger board 10 of this embodiment.

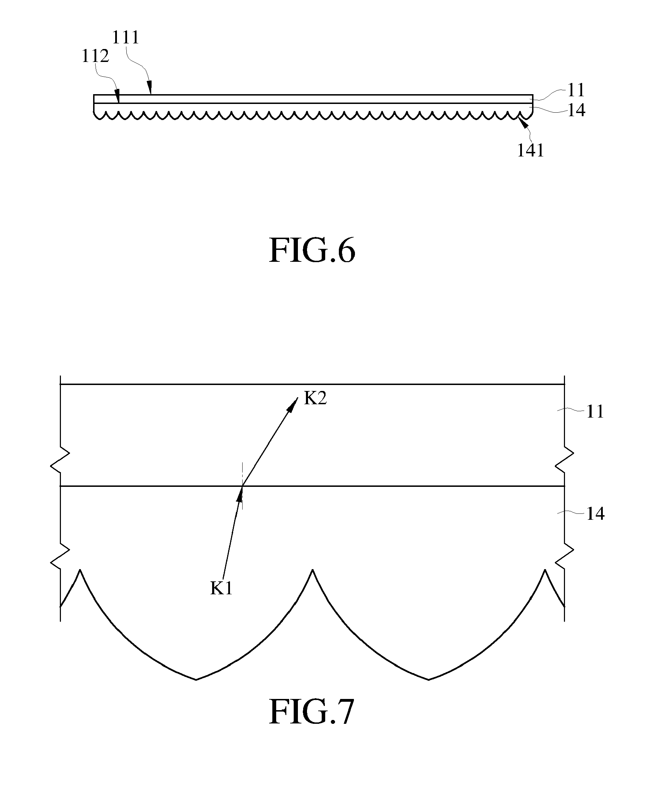

FIG. 6 is a structural sectional view of a finger board according to another embodiment. FIG. 7 is a diagram of a transmission path of a light ray in a finger board according to another embodiment.

The structure in this embodiment is similar to that in the embodiment of FIG. 2 so the same structure and light transmission path will not be described herein again. Different from the embodiment of FIG. 2, the finger board 10 of this embodiment does not have the medium layer 13 and the adhesion layer 12. The micro-structure layer 14 in this embodiment is directly formed on the second board surface 112 of the board layer 11. Moreover, as shown in FIG. 7, when a light ray K1 is emitted from the micro-structure layer 14 to the board layer 11, since the refractive index of the micro-structure layer 14 is different from that of the board layer 11, the light ray K1 is refracted between the micro-structure layer 14 and the board layer 11, and enters the board layer 11 along a path of a light ray K2. In other words, when the light ray is emitted from the micro-structure layer 14 to the board layer 11 in the finger board 10, the light ray is refracted once.

In the finger board according to the present disclosure, a plurality of micro-structures is employed to make the light ray be uniformly distributed on the finger board. Therefore, the finger is illuminated by the uniform and dense light ray emitted form the finger board, and thereby, the fingerprint recognition rate is improved. Moreover, the finger board comprises multiple layers with different refractive indexes so a part of the light ray entering the finger board is reflected and another part of the light ray entering the finger board is scattered. Therefore, a fingerprint recognition apparatus employing the finger board of the present disclosure does not need to restrict the installation position and angle of other devices, thereby simplifying an assembly procedure of the fingerprint recognition apparatus, reducing the assembly cost, improving assembly convenience and making the fingerprint recognition apparatus even thinner. In addition, the micro-structure layer of the finger board according to the present disclosure may be formed by rolling screen printing, thereby saving the cost of molds.

## Claims

1. A finger board for a finger to press, comprising:
a board layer with a first refractive index comprising a first board surface and a second board surface opposite to each other, wherein the first board surface is for the finger to press; and
a micro-structure layer with a second refractive index different from the first refractive index being disposed on the second board surface,
wherein after a light ray is emitted in the micro-structure layer, the light ray is refracted between the micro-structure layer and the board layer, reflected and scattered on the first board surface, refracted again between the micro-structure layer and the board layer, and then emitted out of the micro-structure layer.

2. The finger board according to claim 1, wherein one side of the micro-structure layer opposite to the board layer has a plurality of protruding micro-structures.

3. The finger board according to claim 1, wherein the material of the micro-structure layer is an ultraviolet curing agent.

4. The finger board according to claim 1, wherein the material of the board layer is acrylic or glass.

5. A finger board, applied for a finger to press, comprising:
a board layer with a first refractive index comprising a first board surface and a second board surface opposite to each other, wherein the first board surface is for the finger to press;
a micro-structure layer with a second refractive index different from the first refractive index being disposed at one side of the board layer having the second board surface;
a medium layer with a third refractive index different from the first refractive index and the second refractive index being located between the micro-structure layer and the board layer; and
an adhesion layer with a fourth refractive index different from the first refractive index, the second refractive index, and the third refractive index being located between the medium layer and the board layer,
wherein after a light ray is projected in the micro-structure layer, the light ray is refracted between the micro-structure layer and the medium layer, between the medium layer and the adhesion layer, and between the adhesion layer and the board layer in turn, then reflected and scattered on the first board surface, then refracted between the board layer and the adhesion layer, between the adhesion layer and the medium layer, and between the medium layer and the micro-structure layer in turn, and then emitted out of the micro-structure layer.

6. The finger board according to claim 5, wherein one side of the micro-structure layer opposite to the medium layer has a plurality of protruding micro-structures.

7. The finger board according to claim 5, wherein the material of the micro-structure layer is an ultraviolet curing agent.

8. The finger board according to claim 5, wherein the material of the board layer is acrylic or glass.

9. The finger board according to claim 5, wherein the material of the medium layer is polyethylene terephthalate (PET).

10. The finger board according to claim 5, wherein the material of the adhesion layer is optically clear adhesive (OCA).
